# EUROPEAN PATENT APPLICATION

(11) **EP 1 457 306 A2**
(43) Date of publication of application: **15.09.2004**
(21) Application number: 04003485.2
(22) Date of filing: 17.02.2004
(51) Int. Cl.: B29C 65/18, B65B 9/08, B65B 51/22

(54) **A bag sealing apparatus**

(30) Priority: 17.02.2003 JP 2003037613
(71) Applicant: Toyo Jidoki Co., Ltd., Tokyo (JP)
(72) Inventor: Hiramoto, Shinichi, Iwakuni-shi Yamaguchi (JP); Tsutsui, Shoji, Iwakuni-shi Yamaguchi (JP)
(74) Representative: Schubert, Siegmar, Dipl.-Ing.

(57) **Abstract**

A bag sealing apparatus including a receiving member 34 attached to a fixed plate 31 and a sealing member (heating plate) 33 attached to a movable plate 32 that is disposed beneath the fixed plate 31. The upward and downward movement of the movable plate 32 is guided by the guide shafts 35. A plurality of rubber tubes 36 are connected between the fixed plate 31 and movable plate 32. The rubber tubes 36 expand in the radial direction and contract in length when compressed air is supplied and recover to their original state when the compressed air is discharged; accordingly, the movable plate 32 is moved to and from the fixed plate 31, and at the same time, the heating plates 33 and 34 are separated from and contacted with each other.

## Description

### BACKGROUND OF THE INVENTION

### 1. Field of the Invention

The present invention relates to a bag sealing apparatus such as a bag sealing apparatus in a bag-making machine or a bag mouth sealing apparatus in a bag-filling packaging machine, etc.

### 2. Prior Art

A bag sealing apparatus in bag-making machines and a bag mouth sealing apparatus in bag-filling packaging machines perform sealing by holding specified locations on the bag (for example, both side portions and the bottom in the case of a bag-making machine, or the bag mouth in the case of a bag-filling packaging machine) using a pair of sealing means (sealing member and receiving member) that are disposed facing each other. As is generally known, the sealing systems used include a heat sealing system in which bags are held by a pair of heating plates which contain heaters and are disposed to face each other, an impulse sealing system in which bags are held by a heater block that contains heater wires and a receiving block which is disposed facing the heater block, and an ultrasonic sealing system in which bags are held by a horn that vibrates ultrasonically and an anvil that is disposed facing this horn.

Furthermore, a means that uses an air cylinder and a means that uses a cam are commonly employed as the driving means used to cause the sealing member and receiving member to approach and separate from each other. For example, air cylinders are used in Japanese Utility Model Registration Nos. 2600077 and 2607484, while in Japanese Utility Model Registration No. 2605892, the raising-and-lowering device that raises and lowers the driving shaft 11 (paragraph 0011 in the same reference) appears to be a cam that is rotated by the driving source of the bag-filling packaging machine.

However, the following problems have been respectively encountered in sealing apparatuses that use air cylinder and cams as a driving means:
(1) From the standpoint of improving productivity, it is generally desirable that it be possible to increase the operating speed (opening-and-closing speed) of the sealing means to a high speed. However, if the drop in performance and decrease in the useful life caused by wear of the sealing means, and the deterioration in the working environment caused by the generation of impact noise, are taken into consideration, it is desirable that the operating speed at the instant at which the sealing means closes be on the small side. However, in the case of an air cylinder, the speed tends to be more or less constant during the entire stroke, or to rise in the final stage of the stroke, so that it is difficult to realize the above-described operating characteristics. Furthermore, if the operating speed is increased, the impact noise of the air cylinder itself becomes severe.
(2) If the production rate of a bag-making machine or bag-filling packaging machine is varied, the operating speed of the sealing means also varies. However, from the standpoint of the quality of the sealed portions, it is desirable that the time for which the bags are held or pressed by the sealing means (i.e., the sealing time) be constant regardless of the operating speed of the sealing means. In the case of cam driving, however, the sealing time varies when the operating speed is varied; accordingly, changes in the production rate of the bag-making machine or bag-filling packaging machine cannot be adequately handled.
(3) If an attempt is made to obtain a high sealing pressure using the sealing means, an increase in the size of the sealing apparatus is unavoidable. For example, in the case of cam driving, numerous levers or links are interposed between the driving source and the sealing means; accordingly, a strong frame structure that supports these levers or links is required. The structure is also complicated, and inferior in terms of cost, cleaning characteristics and maintenance. In the case of air cylinder driving, a large-diameter cylinder is required.

### SUMMARY OF THE INVENTION

The present invention is to solve such problems encountered in conventional sealing apparatuses used in bag-making machines or bag-filling packaging machines.

The main object of the present invention is: to make it possible to slow the operating speed at the instant of closing of the sealing means compared to the operating speed in the stroke up to this point, even in cases where the overall operating speed of the sealing means is large, to prevent a drop in performance and decrease in useful life caused by wear of the sealing means, and a deterioration in the working environment caused by the generation of impact noise, and to make it possible to maintain the sealing time at a constant time even if the production rate of the bag-making machine or bag-filling packaging machine varies, so that a high sealing quality is obtained.

It is a further object of the present invention to make it possible to realize a high sealing pressure without increasing the size of the sealing apparatus.

The above objects are accomplished by the unique structure of the present invention for a bag sealing apparatus in which the apparatus comprises a sealing member and receiving member that can open and close (or can be separated from and come into contact with each other) and that are constantly urged in the direction to open (or opposing directions), and a driving means that closes (or contacts) the sealing member and receiving member; and the above driving means comprises rubber tubes which expand in the radial direction and contract in length when compressed air is supplied, and which recover to its original state when this compressed air is discharged, and the rubber tubes are connected to the sealing member and receiving member so that the sealing member and receiving member close (or come into contact with each other) when the length of the rubber tubes contracts.

When compressed air is supplied to the interior of the rubber tubes, the rubber tubes expand in the radial direction, and the length of the rubber tubes contracts. In this case, tension is generated in the axial direction in accordance with the amount of contraction. However, when the compressed air is discharged so that the rubber tubes recover to their original state (i.e., when the rubber tubes contract in the radial direction and the length of the tubes is extended), there is substantially no generation of any force in the opposite direction. Accordingly, the tension that is generated when the length of the rubber tubes contracts can be used to close (or contact) the sealing member and receiving member; however, some other biasing force must be used when the sealing member and receiving member are opened (or separated). A spring biasing force can generally be used as this biasing force; however, gravity can also be used as a biasing force.

Furthermore, the rate at which the length of the rubber tubes contracts is large while the pressure difference between the pressure inside the tubes and the pressure of the supplied compressed air is large and decreases as this pressure difference decreases (i.e., in the final stage of pressurization). Accordingly, by appropriately controlling the pressure of the compressed air, it is possible to obtain operating characteristics in which the opening-and-closing speed of the sealing member and receiving member is increased, and this speed is decreased at the instant of closing. Furthermore, since the timing of the supply and discharge of compressed air to and from the rubber tubes can be adjusted independently of the driving source of the bag-making machine or bag-filling packaging machine, the sealing time can be maintained at a constant time even when the operating speed is altered in accordance with changes in the production rate of the bag-making machine or bag-filling packaging machine.

Tubes marketed under the commercial name of "Rubber Muscle" by Festo K.K. can be used as the above-described rubber tubes.

For example, particularly in cases where the above-described sealing apparatus is applied to a bag-making machine, the sealing apparatus takes the following configuration: the sealing apparatus includes a pair of plates which are disposed parallel to each other so as to be separated by a specified distance, can approach each other in relative terms from these positions, and are constantly urged in the direction that separates these plates; a sealing member and a receiving member which are attached to the pair of plates so that these members face each other; a plurality of guide shafts which are disposed perpendicular to the pair of plates and guide a relative approach and separation of the plates; and a driving means which closes (or contacts) the sealing member and the receiving member by way of causing the pair of plates to approach each other; and in this sealing apparatus, the driving means comprises a plurality of rubber tubes which expand in the radial direction and contract in length thereof when compressed air is supplied thereto and which recover to their original states when the compressed air is discharged; and further the rubber tubes are connected to the pair of plates so that the pair of plates approach each other when the rubber tubes contract in length.

In the above-described sealing apparatus, both of the pair of plates can be movable, or one plate can be fixed while the other plate is movable. In the latter case, for example, the sealing apparatus can adopt the following configuration: the sealing apparatus includes a fixed plate; a movable plate which is disposed parallel to the fixed plate so as to be separated from the fixed plate by a specified distance, can approach the fixed plate from this position, and is constantly urged in the direction that separates this movable plate from the fixed plate; a sealing member and a receiving member which are attached to the fixed and movable plates so that these members face each other; a plurality of guide shafts which are disposed perpendicular to the movable plate and guide the movement of the movable plate; and a driving means which closes (or contacts) the sealing member and the receiving member by way of causing the movable plate to approach the fixed plate; and in this the sealing apparatus, the driving means comprises a plurality of rubber tubes which expand in the radial direction and contract in length thereof when compressed air is supplied thereto and recovers to their original states when the compressed air is discharged, one end of each of the rubber tubes is connected to the movable plate side while the other end of the rubber tube is connected to the fixed plate side, and the movable plate is caused to approach the fixed plate when the rubber tubes contract in length.

In regard to the above sealing member and receiving member that constitute the sealing means in the present invention, the member that mainly performs the sealing action is the sealing member, and the other member is the receiving member. Accordingly, in the case of an impulse sealing system, the heater block side is the sealing member, and the receiving block side is the receiving member. In the case of an ultrasonic sealing system, the horn side is the sealing member, and the anvil side is the receiving member. Furthermore, in the case of a heat sealing system, if the actions of both heating plates are the same, there is no actual advantage to be gained from distinguishing between the sealing member and the receiving member; accordingly, either member can be called the sealing member or receiving member. However, for example, in cases where the surface of one of the heating plates is covered by a heat-resistant elastic material such as a silicone rubber or the like so that the surface temperature of this heating plate is set at a lower temperature than that of the other heating plate, then this first heating plate side is the receiving member. In such cases, it is desirable that the sealing member (high-temperature side) be attached to the movable plate and the receiving member (low-temperature side) be attached to the fixed plate. The reasons for this will become clear from the description below.

### BRIEF DESCRIPTION OF THE DRAWINGS

Figure 1 is a schematic perspective view of a bag-making and packaging machine in which a bag-making apparatus using the sealing apparatus of the present invention and a bag-filling packaging machine are installed together;
Figure 2 is a sectional front view of the first sealing apparatus of the present invention;
Figure 3 is a sectional left-side view thereof; and
Figure 4 is a sectional left-side view of the second sealing apparatus of the present invention.

### DETAILED DESCRIPTION OF THE INVENTION

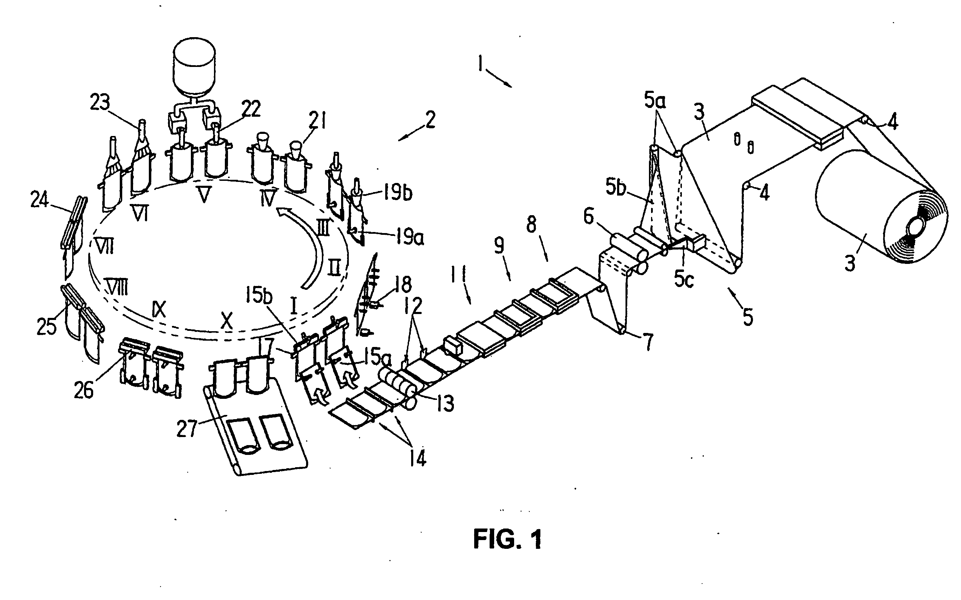

The sealing apparatus of the present invention will be concretely described below with reference to Figures 1 through 4.

Figure 1 is a schematic diagram of a bag-making and packaging machine in which a bag-making machine 1 and a bag-filling packaging machine 2 are installed together. The bag-making machine 1 is a machine that continuously unrolls a film 3 that is rolled up in the form of a roll, and forms this film into self-standing bags (gusset bags). This bag-making machine 1 comprises, among others, a plurality of guide rollers 4, a gatefolding apparatus 5 (forming roller 5a, forming plate 5b and gatefolding plate 5c), a feed roller 6 (continuously rotating), a dancer roller 7, a first sealing apparatus 8, a second sealing apparatus 9, a cooling apparatus 11, a notch cutter 12, a feed roller 13 (intermittently rotating), and a side cutter 14.

In this bag-making machine 1, the film 3 is continuously fed out and is folded in two by the forming roller 5a and forming plate 5b of the gatefolding apparatus 5. At the same time, a gatefold is formed in the bottom by the gatefolding plate 5c. The film 3 that is intermittently fed out via the dancer roller 7 is sealed twice in places corresponding to both side portions and the bottom of the bag by the first sealing apparatus 8 and second sealing apparatus 9; then, the sealed portions are cooled by the cooling apparatus 11, circular-arc-form cuts are formed in places correspond to both of the upper-end comers of the bag by the notch cutter 12, and the film is separated by cutting into individual bags by the side cutter 14.

The basic construction of the above-described bag-making machine 1 is generally known as is described in, for example, Japanese Patent Application Laid-Open (Kokai) No. 2002-36392.

The bags W manufactured by the bag-making machine 1 are suction-chucked and lifted by the suction plates 15a of a bag supplying apparatus; then, the bag mouths are gripped by gripping members 15b, and the bags are supplied to the grippers 17 of the packaging apparatus 2.

The packaging apparatus 2 is an intermittently rotating table type packaging apparatus which is itself generally known (for example, see the above-described Japanese Patent Application Laid-Open (Kokai) No. 2002-36392). The packaging apparatus 2 is arranged so that bags W are received from the bag supplying apparatus in a stopping position I, and both edge portions of the bags W are gripped by the grippers 17, after which packaging operations on the bags W are successively performed while the table intermittently rotates.

More specifically, printing is performed on the bag surfaces by a printer 18 during the movement of the bags W from the stopping position I to a stopping position II, the bag mouths are opened by suction plates 19a and air nozzles 19b in a stopping position III, the bags can be filled with solid matter via hoppers 21 in a stopping position IV, the bags can be filled with liquid matter via nozzles 22 in a stopping position V, steam is injected into the interiors of the bags from steam nozzles 23 in a stopping position VI, so that gas replacement is performed in the interiors of the bags, the bag mouths are sealed by a first sealing heater 24 in a stopping position VII, the bag mouths are again sealed by a second sealing heater 25 in a stopping position VIII, the sealed portions are cooled by cooling bars 26 in a stopping position IX, and the grippers 17 are opened in a stopping position X, so that the filled and sealed bags W are caused to drop onto a discharge conveyor 27.

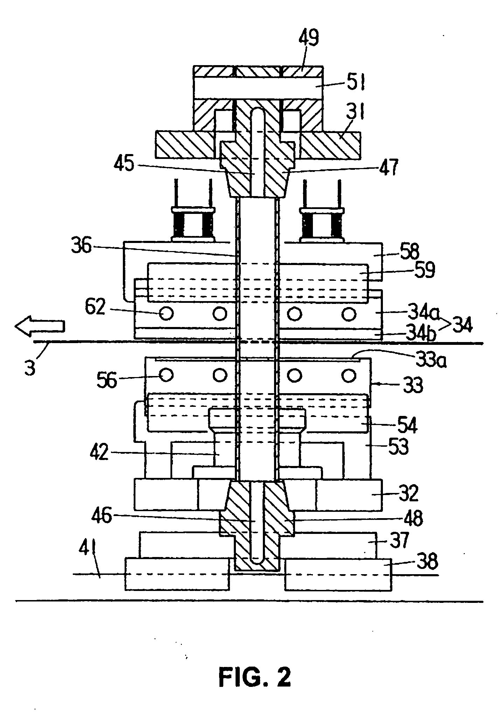

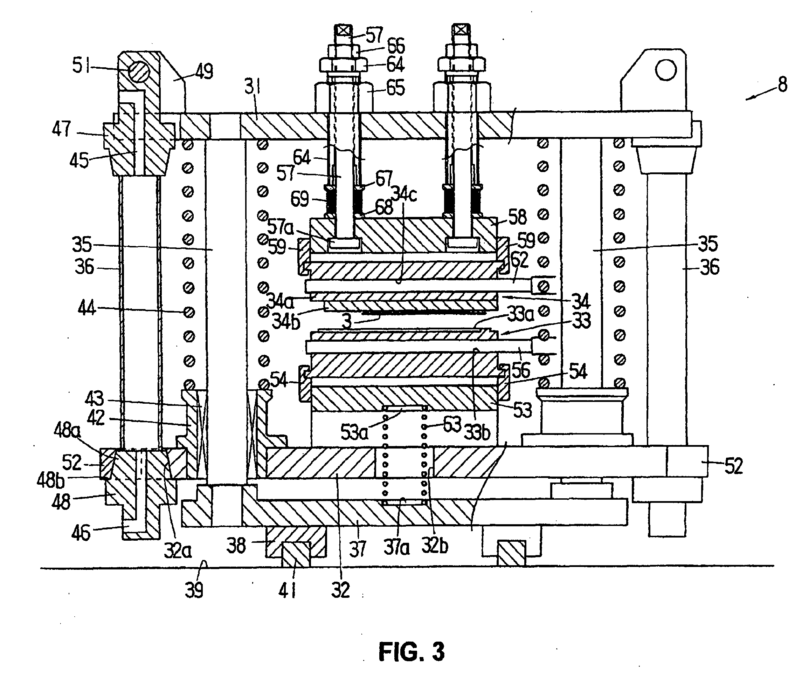

The first sealing apparatus 8 and second sealing apparatus 9 of the bag-making machine 1 are the sealing apparatus of the present invention. First, the first sealing apparatus 8 will be described with reference to Figures 2 and 3.

The first sealing apparatus 8 comprises a fixed plate 31 which is horizontally disposed above, a movable plate 32 which is horizontally disposed beneath the fixed plate 31, a sealing member 33 (hereafter referred to as the "heating plate 33") which is attached to the movable plate 32 so that this heating plate 33 faces upward, a receiving member 34 (hereafter referred to as the "heating plate 34") which is attached to the fixed plate 31 so that this heating plate 34 faces downward, two guide shafts 35 which are disposed in a vertical attitude, and which guide the movement of the movable plate 32, and two rubber tubes 36 whose upper ends are connected to the fixed plate 31, and whose lower ends are connected to the movable plate 32.

The lower ends of the guide shafts 35 are fastened to a horizontally disposed lower plate 37, and the upper ends of these guide shafts 35 are fastened to the fixed plate 31. Slide members 38 are fastened to the undersurface of the lower plate 37; these slide members 38 are fit over slide rails 41 that are disposed along the feeding direction of the film 3 on a machine base 39 so that these slide members 38 are free to slide. The position of the first sealing apparatus 8 can be adjusted by means of the slide members 38 and slide rails 41.

Bearing holders 42 are fastened to the movable plate 32 at points located in the vicinity of both ends of the movable plate 32. Slide bearings 43 disposed inside these bearing holders 42 fit around the circumferences of the guide shafts 35. As a result of this structure, the movable plate 32 can approach and separate from the fixed plate 31 while maintaining a horizontal attitude. Furthermore, recovery compression springs 44 which are used to cause the movable plate 32 to separate from the fixed plate 31 are attached between the fixed plate 31 and the bearing holders 42.

Upper-side tube holding members 47 which have air supply and discharge holes 45 formed inside are fastened to the upper ends of the rubber tubes 36. Furthermore, shaft supporting blocks 49 are fastened to the upper surface of the fixed plate 31, and supporting shafts 51 are fastened to these shaft supporting blocks 49. The upper-side tube holding members 47 are fit over the supporting shafts 51 so that these tube holding members 47 are free to pivot. Furthermore, lower-side tube holding members 48 which have air supply and discharge holes 46 formed inside are fastened to the lower ends of the rubber tubes 36; and holding holes 32a which have the shape of a truncated circular cone are formed by the movable plate 32 and holding blocks 52 that are fastened to the outside of the movable plate 32. The upper end portions 48a of the truncated circular cone shapes of the lower-side tube holding members 48 are fit into the holding holes 32a, and step parts 48b on the lower-side tube holding members 48 engage with the outer circumferential parts on undersurface sides of the holding holes 32a.

The above-described air supply and discharge holes 45 and 46 communicate with a pressurization and discharge means (not shown) that includes a switching valve, regulator and compressor; and the opening and closing of the switching valve is controlled by a control device (not shown).

A heating plate attachment block 53 is fastened to the surface of the movable plate 32, a heating plate attachment member 54 is fastened to this heating plate attachment block 53, and a metal heating plate 33 is fastened to the heating plate attachment member 54. A protruding portion (sealing portion) 33a, which is used to seal locations corresponding to both side portions and the bottom of the bags, is formed on the surface of the heating plate 33. Heater attachment holes 33b are formed inside the heating plate 33, and heater rods 56 are inserted into these holes so that the heating plate 33 is heated.

A heating plate attachment block 58 is attached to the tip ends of sealing initial stage pressure setting bolts 57 on the fixed plate 31 side; a heating plate attachment member 59 is fastened to this heating plate attachment block 58, and a heating plate 34 is fastened to the heating plate attachment member 59. The heating plate 34 includes a metal base portion 34a (with the same material and structure as those of the heating plate 33) and a silicone rubber plate 34b that covers this metal base portion 34a. The surface of this silicone rubber plate 34b is flat. Furthermore, heater attachment holes 34c are formed in the base portion 34a of the heating plate 34, and heater rods 62 are inserted into these holes, so that the heating plate 34 is heated. The surface temperature of the heating plate 34 is set at a lower temperature than the surface temperature of the heating plate 33.

The silicone rubber plate 34b that covers the surface of the heating plate 34 has the action of evening out the contact between the protruding portion 33a of the heating plate 33 and the heating plate 34 when the film 3 is held between this silicone rubber plate 34b and the metal heating plate 33.

Spring receiving recessed portions 53a and 37a are respectively formed in the undersurface side of the heating plate attachment block 53 and the upper surface side of the lower plate 37, and a compression spring 63 is disposed in these recessed portions 53a and 37a via a through-hole 32b formed in the movable plate 32. This compression spring 63 acts in conjunction with the recovery compression springs 44 to suppress vibration of the movable plate 32 when the movable plate 32 is lowered.

Final sealing pressure adjustment hollow bolts 64 are screw-engaged in screw holes formed in the fixed plate 31 and protrude downward. The sealing initial pressure setting bolts 57 are screw-engaged with the internal screws of these final sealing pressure adjustment hollow bolts 64 and protrude further downward. Lock nuts 65 are screw-engaged with the final sealing pressure adjustment hollow bolts 64, and lock nuts 66 are screw-engaged with the sealing initial pressure setting bolts 57, above the fixed plate 31. The heating plate attachment block 58 is engaged with heads 57a on the lower ends of the sealing initial pressure setting bolts 57, and compression springs 69 are mounted between the tip ends of the final sealing pressure adjustment hollow bolts 64 and the upper surface of the heating plate attachment block 58 with washers 67 and 68 interposed. The final sealing pressure adjustment hollow bolts 64 also act to adjust the degree of parallel orientation of the facing sealing surfaces of the two heating plates 33 and 34.

The order of adjustment is performed as follows: first, the lock nuts 66 are loosened, and the sealing initial pressure setting bolts 57 are rotated so that the compression springs 69 are compressed, thus setting the force that acts when the compression springs 69 begin to be compressed during sealing, i.e., the pressure in the initial stage of sealing. Then, the lock nuts 66 are tightened. Next, the lock nuts 65 are loosened, and the final sealing pressure adjustment hollow bolts 64 are rotated so that the heating plate 34 is moved upward or downward, thus setting the final amount of compression of the compression springs 69, i.e., the final sealing pressure. Then, if necessary, one of the final sealing pressure adjustment hollow bolts 64 is slightly rotated so that the inclination of the heating plate 34 is corrected, thus placing the facing sealing surfaces of the two heating plates 33 and 34 in a parallel orientation. The lock nuts 65 are then tightened.

The rubber tubes 36 used as the driving means for the movable plate 32 in the first sealing apparatus 8 expand in the radial direction and contract in length when compressed air is supplied to the interiors of these rubber tubes, so that the movable plate 32 is raised and approaches the fixed plate 31. As a result, the heating plate 33 is moved toward the heating plate 34, so that these two heating plates 33 and 34 come into contact with each other to close and thus hold and seal specified locations on the gatefolded film 3. The rate of contraction of the length of the rubber tubes 36 is large while the pressure difference between the pressure inside the tubes and the compressed air is large and decreases as this pressure difference decreases (i.e., in the final stage of pressurization). Accordingly, by adjusting the air pressure, it is possible to obtain operating characteristics which are such that the speed at which the heating plate 33 and heating plate 34 close (or contact) is large, and the speed at the instant of closing is small.

When the compressed air is discharged from the rubber tubes 36, the rubber tubes 36 themselves return to their original length; at the same time, the movable plate 32 is lowered by the biasing force of the recovery compression springs 44. In cases where the movable plate 32 is located below as in the first sealing apparatus 8, the movable plate 32 can also be lowered by gravity; accordingly, the recovery compression springs 44 are not essential.

Furthermore, in cases where the opening and closing (or the separating and contacting) action of the heating plate 33 and heating plate 34 is accomplished by the movement of only one of the heating plates (33) as in the first sealing apparatus 8, the film 3 is fed near the heating plate 34 on the fixed plate 31 side in order to prevent upward and downward movement of the film 3 accompanying the movement of the heating plate 33. In the first sealing apparatus 8, since the heating plate 33 on the movable plate 32 side is heated to a higher temperature, the film 3 is fed through a position that is separated from this heating plate 33 that is heated to a higher temperature. As result, heating caused by heat radiating from the heating plate 33 is suppressed, so that wrinkling of the film 3 is prevented. Furthermore, overheating of the film 3 when the bag-making machine 2 is stopped is prevented.

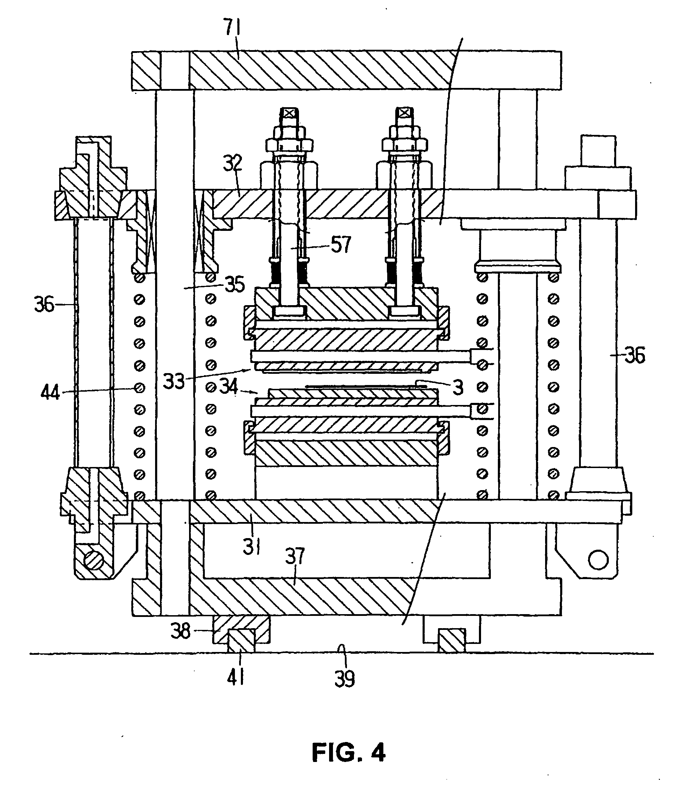

Figure 4 shows the second sealing apparatus 9.

In Figure 4, members labeled with the same numbers as in the first sealing apparatus 8 are substantially the same as the members with these numbers in the first sealing apparatus 8.

The second sealing apparatus 9 differs from the first sealing apparatus 8 in that the heating plate 33 that has a high surface temperature is positioned on the upper side, and the heating plate 34 that has a low surface temperature is positioned on the lower side. In addition, the following points are the main points of difference between the second sealing apparatus 9 and the first sealing apparatus 8: in the second sealing apparatus 9, (1) the movable plate 32 is disposed above, and the fixed plate 31 is disposed below, (2) the fixed plate 31 is fastened to the lower plate 37, (3) the upper ends of the guide shafts 35 are connected and fastened by an upper plate 71, (4) the members used for sealing pressure and sealing position adjustment (i.e., the sealing position adjustment bolts 57, etc.) belong to the movable plate 32 side, and (5) no part corresponding the compression spring 63 is installed.

However, the above structures (1) through (4) are merely alterations that result from the fact that the heating plate 33 with a high surface temperature is positioned on the upper side and the heating plate 34 with a low surface temperature is positioned on the lower side, and (5) is not essential even in the first sealing apparatus.

The second sealing apparatus 9 is the same as the first sealing apparatus 8 in that the heating plate 33 with a high surface temperature is attached on the movable plate 32 side and the heating plate 34 with a low surface temperature is attached on the fixed plate 31 side. Furthermore, the second sealing apparatus 9 is also the same as the first sealing apparatus 8 in that the rubber tubes 36 are connected between the movable plate 32 and fixed plate 31. However, in the second sealing apparatus 9, the recovery compression springs 44 are essential.

In the second sealing apparatus 9 as well, the film 3 is fed through a position that is distant from the heating plate 33 that is heated to a higher temperature.

The respective operations of the first sealing apparatus 8 and second sealing apparatus 9 can be briefly described as follows:
(1) In the first sealing apparatus 8, when compressed air is supplied to the interiors of the rubber tubes 36 from the air supply and discharge holes 45 and 46 with the two heating plates 33 and 34 in an open (separated) state (see Figures 2 and 3), the rubber tubes 36 contract in length so that the movable plate 32 is raised, and the heating plate 33 is moved toward the heating plate 34 so that the two heating plates 33 and 34 come into contact with each other to close, thus holding and sealing specified locations on the gatefolded film 3. In this case, since the heating plate 33 on the high-temperature side is located below, the film 3 is particularly heated and sealed from below.
(2) When compressed air inside the rubber tubes 36 is discharged from the air supply and discharge holes 45 and 46 after the specified sealing time has elapsed, the rubber tubes 36 extend in length so that the movable plate 32 is lowered, thus causing the heating plate 33 to separate from the heating plate 34, so that the two heating plates 33 and 34 open. Then, the film 3 is fed by 1 pitch.
(3) The film 3 that is fed into the second sealing apparatus 9 is sealed in the same manner as in the first sealing apparatus 8. In this case, however, since the heating plate 33 on the high-temperature side is located above, the film 3 is particularly heated and sealed from above (in a manner that is the opposite of the heating and sealing in the first sealing apparatus 8). Thus, since the same locations on the film 3 are sealed twice from opposite directions by the first sealing apparatus 8 and second sealing apparatus 9, sealing defects tend not to occur.
(4) After the specified sealing time has elapsed, the two heating plates 33 and 34 are opened (separated) in the same manner as in the first sealing apparatus 8, and the film 3 is then fed by one pitch.

In the above description, one of the pair of plates is fixed, while the other plate is made movable. However, it is also possible to design so that both of the plates are moved at the same time. Furthermore, the above-described sealing apparatus is especially suitable for use in a bag-making machine; however, the present invention is also applicable to sealing apparatuses for a bag-filling packaging machine. In such a case, for example, the driving source used in the sealing apparatuses described in the above-described Japanese Utility Model Registration Nos. 2607484 and 2605892 can be replaced with rubber tubes.

As seen from the above, according to the present invention, since rubber tubes are used as the driving source of the sealing apparatus, such operating characteristics are obtained that the opening-and-closing speed of the sealing member and receiving member increases, and the speed at the instant of closing slows down. Accordingly, a drop in performance and decrease in useful life caused by the wear of the sealing member and receiving member, and deterioration in the working environment caused by the generation of impact noise, can be prevented. Furthermore, since the rubber tubes themselves generate no impact noise, the working environment does not deteriorate.

In addition, since the timing of the supply and discharge of compressed air to and from the rubber tubes is adjusted independently of the driving source of the bag-making machine or bag-filling packaging machine, the sealing time is maintained at a constant time, and a high sealing quality is obtained, even in cases where the operating speed is altered in accordance with changes in the production rate of the bag-making machine or bag-filling packaging machine.

Furthermore, since the rubber tubes produce the same output as air cylinders with tubes of a smaller diameter, the size of the sealing apparatus can be reduced. Moreover, the structure is simple, it is superior in terms of coast, cleaning characteristics and maintenance.

## Claims

1. A bag sealing apparatus comprising:
a sealing member and a receiving member that are provided so as to face each other, said sealing member and receiving member being able to open and close and are constantly urged in a direction to open, and
a driving means that closes said sealing member and receiving member; wherein
said driving means is comprised of rubber tubes in which
said rubber tubes expand in a radial direction thereof and contract in length thereof when compressed air is supplied thereto, and said rubber tubes recover to its original state when said compressed air is discharged, and
said rubber tubes are connected to said sealing member and receiving member so that said sealing member and receiving member close when said rubber tubes contract in length thereof.

2. A bag sealing apparatus comprising:
a pair of plates which are disposed parallel to each other so as to be separated by a specified distance, said pair of plates being approachable each other in relative terms from separated positions and constantly urged in a direction that separates said pair of plates,
a sealing member and a receiving member which are respectively attached to said pair of plates so as to face each other,
a plurality of guide shafts which are disposed perpendicular to said pair of plates and guide a relative approach and separation of said pair of plates, and
a driving means which closes said sealing member and receiving member by causing said pair of plates to approach each other; wherein
said driving means is comprised of a plurality of rubber tubes in which
said rubber tubes expand in a radial direction thereof and contract in length thereof when compressed air is supplied thereto and recover to original states thereof when said compressed air is discharged, and
said rubber tubes are connected to said pair of plates so that said pair of plates approach each other when said rubber tubes contract in length.

3. A bag sealing apparatus comprising:
a fixed plate,
a movable plate which is disposed parallel to said fixed plate so that said movable plate is separated from said fixed plate by a specified distance, said movable plate being approachable said fixed plate from a separated position and constantly urged in a direction that separates said movable plate from said fixed plate,
a sealing member and a receiving member which are respectively attached to said movable and fixed plates so as to face each other,
a plurality of guide shafts which are disposed perpendicular to said movable plate and guide a movement of said movable plate, and
a driving means which closes said sealing member and receiving member by causing said movable plate to approach said fixed plate; wherein
said driving means is comprised of a plurality of rubber tubes in which
said rubber tubes expand in a radial direction thereof and contract in length thereof when compressed air is supplied thereto and recover to original states thereof when said compressed air is discharged,
one end of each one of said rubber tubes is connected to said movable plate side while another end of said one of said rubber tubes is connected to said fixed plate side, and
said movable plate is caused to approach said fixed plate when said rubber tubes contract in length.

4. The bag sealing apparatus according to Claim 3, wherein
said sealing member and receiving member comprise heating plates of a heat sealing system,
a surface temperature of said heating plate on said receiving member side is lower than a surface temperature of said heating plate on said sealing member side,
said receiving member is attached to said fixed plate, and
said sealing member is attached to said movable plate.

5. The bag sealing apparatus according to Claim 1, wherein said sealing member and said receiving member are urged in said direction to open by a biasing force of a spring.

6. The bag sealing apparatus according to any one of Claims 2 through 4, wherein said pair of plates are urged by one of gravity and a biasing force of a spring in a direction that separates said plates.
